# EUROPEAN PATENT APPLICATION

(11) **EP 0 989 289 A1**
(43) Date of publication of application: **29.03.2000**
(21) Application number: 98830561.1
(22) Date of filing: 25.09.1998
(51) Int. Cl.: F01N 7/18, F16L 27/111, F16L 55/033, F16L 51/02

(54) **Flexible vibration-decoupling joint, in particular for exhaust pipes in motor vehicles**

(71) Applicant: FLEXIDER S.p.A., I-10156 Torino (IT)
(72) Inventor: Capra, Gian Luigi, 10100 Torino (IT)
(74) Representative: Cerbaro, Elena, Dr.

(57) **Abstract**

A decoupling joint (1) of the type in which two annular end pieces (4,5), sealingly fixable to respective opposite portions of pipe (2,3) to be connected, are connected to each other by a first metal bellows-shape sleeve (7), elastically deformable and which connects the end pieces (4,5) with a fluid-tight seal, and by a second metal sleeve (10) defining a part that mechanically supports the connection, located radially outside the bellows sleeve (7) and the end pieces (4,5), fitted axially over these latter; a first end piece has an internal flow-guide element (13) shaped to define a cantilevered portion of duct that extends axially with radial play into the first metal sleeve (7) and towards the second end piece, starting from the first end piece and extending in the direction of flow until it reaches the second end piece; the flow guide element (13) is formed from an annular plug in the form of a tube formed from wire mesh, constituted by a tubular metal sock folded to form multiple radial layers and made from stainless steel wire braided to form a linked mesh.

## Description

The present invention concerns a flexible vibration-decoupling joint which connects associated portions of pipe with a fluid-tight seal, in particular, that can be fitted along a pipe of an exhaust system of a motor vehicle having an internal combustion engine to connect the end portion of the pipe of the exhaust manifold of the engine with the pipe section entering the catalyst.

In the prior art, numerous examples are known of flexible joints that connect two portions of an exhaust pipe of a motor vehicle with an airtight seal. A first version, rather complex and bulky, has a flexible corrugated sleeve to effect the fluid-tight connection, and support pieces connectable to the ends of the pipes to connect them such that they grip each other to form box-like cells that accommodate anti-vibration plugs formed from wire or compressed metal mesh, so-called "wire mesh", which enable the support pieces to be connected together without substantial transmission of vibrations, or "mechanical decoupling".

On the other hand, in a simpler, more economical and less bulky version of the aforesaid joints, the support pieces are formed simply as two annular end pieces that are then connected to each other, through the above-mentioned "wire mesh", by a substantially rigid sleeve located radially outside the end pieces and the bellows, which forms an element independent of the end pieces and the bellows sleeve; the "wire mesh" is held in position by associated double axial shoulders.

A further, even simpler version lacks the support pieces and associated "wire mesh", which are replaced with a metal sleeve outside the corrugated bellows, usually formed from braided wire, this also being connected to the end pieces together with the bellows sleeve and acting as a mechanical support and strengthening element as well as protection for the bellows.

In all of the embodiments mentioned, there is a problem of noise caused by the high frequency vibrations that, in use, are generated in the flexible bellows sleeve by the passage of the exhaust gases. In order to stop these vibrations and "protect" the integrity of the conduit, therefore, these joints can have an internal flow-guide element or "liner", disposed concentrically within the flexible bellows; in a first known version, the liner is a rigid cantilevered tube element extending axially upwards from one of the support pieces; this embodiment, as well as not being entirely satisfactory in damping the noise, has the disadvantage that it can interfere in use, because of the relative movements between the end pieces allowed by the joint itself, with the side walls of the bellows sleeve, with a risk of damage, in order to avoid which the joint is formed with much play which significantly increases the bulkiness thereof.

Other embodiments include liners formed from continuous sleeves, within the bellows and anchored at their ends to the end pieces, formed from braided wire (like the outer supporting sleeve of one of the embodiments described) or a folded metal strip helically wound to form a tube. However, these arrangements have the disadvantage that the liner becomes deformed due to the stresses (thermal and mechanical) received from the exhaust gases, which causes the partial reduction in the gas flow cross-section, with a consequent loss of power of the vehicle engine as well as the progressive stiffening (with the risk of breakage) of the liner made from the folded metal strip.

The object of the invention is to produce a decoupling joint free from the disadvantages described, in particular, that is very simple and economical to manufacture, of reduced size, that permits, in use, the passage of gas flows, even very fast ones, without giving rise to irritating noises and that, finally, is not susceptible to being damaged by the exhaust gases or as a result of the relatively wide angular relative movements between the end pieces connected thereby.

The invention therefore provides for the production of a decoupling joint of the type including: first and second end pieces attachable respectively to first and second portions of pipe to be connected; a first, elastically deformable metal bellows-shape sleeve which connects, in use, the said portions of pipe with a fluid-tight seal, the said first sleeve being mechanically connected on the opposite side of the said end pieces; a second metal sleeve defining a part mechanically supporting the connection, disposed radially outside the first sleeve and fitted axially on the said end pieces; and a flow-guide element shaped to define a portion of duct extending axially to project with radial play inside the first metal sleeve and towards the second end piece, starting from the first end piece and extending in the direction of flow; characterised in that the said flow-guide element is formed from an annular tubular plug formed from wire mesh.

In particular, the wire mesh forming the said plug comprises a tubular metal sock folded to form multiple radial layers and formed from stainless steel wires braided to form a linked mesh. Furthermore, the wire mesh forming the said plug has a degree of compression of between 20% and 40%.

This ensures the very simple and easy, as well as the economical construction of the joint in its entirety, in which the flow-guide element, being light and flexible, does not give rise to additional stresses, despite its cantilevered disposition, and cannot damage the bellows sleeve of the joint, even in the event that occasional interference arises therewith, for example, due to the relative movements between the end pieces allowed by the joint itself. In addition, in the preferred embodiment in which the flow-guide element extends to the second end piece, it can also contribute to the structural support of the joint.

Above all, therefore, the flow-guide element formed from wire mesh according to the principal characteristic of the invention, that is, formed from a material used in the same field for other purposes, or to achieve damped mechanical connections between various elements, surprisingly gives rise to a significant reduction in noise with respect to liners formed from other materials, or having optimum acoustic performance, without the disadvantages of the known liners: in fact, the wire mesh is not damaged in any way by the exhaust gases, which enables a liner that is always effective and flexible to be obtained.

Further characteristics and advantages of the invention will become clear from the following description of a non-limitative embodiment, given with reference to the accompanying drawings, in which:
Figure 1 is a longitudinal view, half of which is shown in section, of a decoupling joint according to the invention; and
Figure 2 is a plan view from the outside of the shape of a component of the joint of Figure 1.

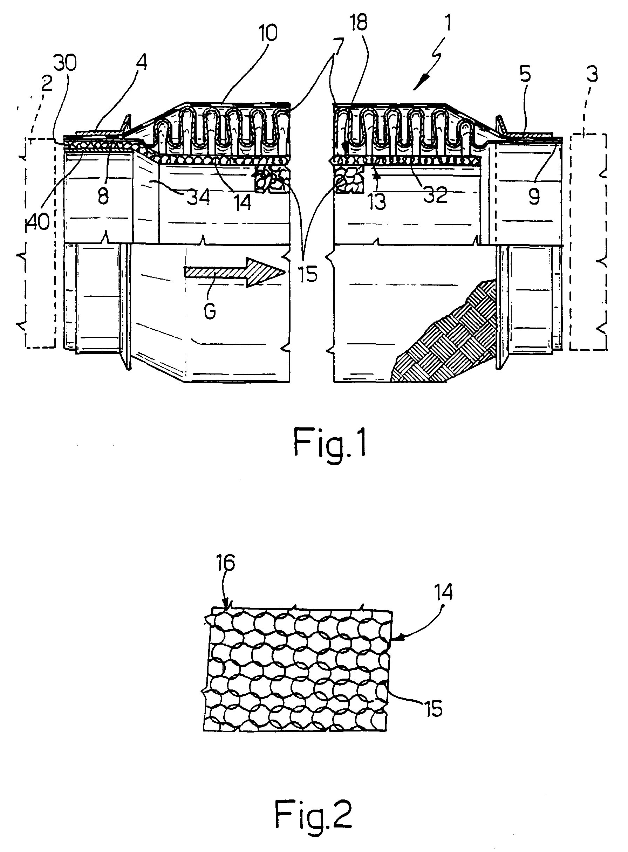

With reference to Figures 1 and 2, the reference numeral 1 generally indicates a flexible, vibration-decoupling joint that connects with a fluid-tight seal and with mechanical "decoupling" respective opposite portions of pipe 2 and 3, in particular, belonging to an exhaust system, known and not illustrated, of a motor vehicle having an internal combustion engine, also known and, for simplicity, not illustrated. For example, the joint 1 can be inserted in series in the aforesaid exhaust system to connect the final portion of pipe 2 of the exhaust manifold of the engine (not shown) with the portion of pipe 3 input to the catalyst (also not shown).

The joint 1 includes two opposite annular end pieces 4 and 5 connectable, in use, with a fluid-tight seal to the portions of pipe 2 and 3, respectively, in a way that is known and, for simplicity, not illustrated, for example, by welding, and an elastically deformable bellows-shape metal sleeve 7 that connects, in use, the portions of pipe 2, 3 with a fluid-tight seal and, for this purpose, is connected firmly at its opposite ends 8 and 9, which are formed as cylindrical sleeves without corrugations, to the end pieces 4 and 5; according to the drawings, the ends 8, 9 are clenched between the end pieces 4, 5 and are, in use, fixed by welding thereto, for example, at the same points at which the end pieces 4, 5 are fixed to the portions of pipe 2, 3.

The joint 1 also includes a metal sleeve 10 defining a part mechanically supporting the connection between the end pieces 4 and 5, located radially outside the bellows sleeve 7 and fitted axially on the end pieces 4, 5; in the example, the sleeve 10 is a partially flexible sleeve, known and formed from crossed metal braid, and is also connected mechanically to the end pieces 4, 5 at the ends 8, 9 of the bellows sleeve 7, being pinched between these latter and the inner cylindrical lateral surface of the end pieces 4, 5; the sleeve 10 acts as a mechanical support and strengthening element for the joint 1, as well as protecting the bellows sleeve 7.

Finally, the joint 1 includes a flow-guide element 13 formed to define a cantilevered portion of duct extending axially into the bellows sleeve 7, in the direction of flow of the exhaust gases, indicated by the arrow G which, in use, are intended to pass over the joint 1; in particular, the flow-guide element 13 extends axially to project with predetermined radial play into the metal bellows sleeve 7 and towards the end piece 5, leaving the end piece 4 and extending in the direction of flow G of the gas, preferably until it substantially reaches the end piece 5.

According to the invention, the flow-guide element 13 is formed from an annular tube-shape plug 14 formed from wire mesh, indicated 15 in Figure 2 and consisting of a tubular metal sock folded, in known way, to form multiple radial layers and formed from stainless steel wires braided to form a linked mesh 16.

In particular, the wire mesh 15 forming the plug 14 has a degree of compression of between 20% and 40%, the term "degree of compression" signifying, here and below, the percentage in volume of solid in the structure of the plug 14. Furthermore, this latter is formed from a lateral wall 18 of wire mesh, which has a minimum radial thickness of at least 2mm and, preferably, of between 2 and 4mm.

The plug 14 forming the element 13 preferably has an attachment portion 30 having an outer diameter substantially equal to the inner diameter of the end piece 4, and an operative cantilevered portion 32 having an outer diameter less than the smallest inner diameters of the two end pieces 4, 5, and of the bellows sleeve 7; the portions 30 and 32 are joined together continuously by means of a substantially frustoconical portion 34, and this and the portion 32 extend axially to project from the attachment portion 30 towards the end piece 5, to the inside thereof or, in any case, to the end 9 of the sleeve 7.

In particular, the tubular wire mesh plug 14 defining the flow-guide element 13 is clenched inside the end piece 4 with its end 30 of greatest diameter, which is calibrated and, preferably, has been widened before mounting. This calibrated end 30 is radially clamped in a pack between the aforesaid cylindrical inner lateral surface of the end piece 4 and a containment ring 40 inserted around the calibrated end 30 of the plug 14.

In use, although not being entirely impermeable to the exhaust gases, which can pass through it, even radially, the wire mesh plug 14 constitutes a duct 13 which guides with a low pressure drop more or less all of the exhaust gases from the duct 2 through the sleeve 7 to the duct 3 without giving rise to flow noise; in fact, the known vibration damping capacity of the wire mesh, in this case, gives the plug 14 a sound absorbing action. Furthermore, this damping capacity prevents the cantilevered mounting of the element 13 giving rise to vibration of the element itself, due to the thrust of the gases which can generate noises; on the other hand, the cantilevered mounting of the "liner" 13 enables the joint 1 to be constructionally simpler, with reduced bulk and a greater possibility of relative movement between the end pieces 4, 5.

Finally, it is clear that the invention described is also applicable to joints different from that described here in non-limitative manner, for example, joints having an outer support and protection element constituted from a rigid metal sleeve coupled in known way to the end pieces 4, 5 by means of the interposition of conventional wire mesh plugs, similar to the plug 14 but intended only to effect the mechanical connection between the different elements of the joint.

## Claims

1. A decoupling joint of the type including: first and second end pieces connectable respectively to first and second portions of pipe to be connected; a first elastically deformable, metal bellows-shape sleeve that connects, in use, the said portions of pipe with a fluid-tight seal, the said first sleeve being mechanically connected on the opposite side of the said end pieces; a second metal sleeve defining a part mechanically supporting the connection, disposed radially outside the first sleeve and fitted axially on the said end pieces; and a flow-guide element shaped to define a cantilevered portion of duct extending axially with radial play into the first metal sleeve and towards the second end piece, starting from the first end piece and extending in the direction of flow;
characterised in that the said flow-guide element is formed from a tube-like annular plug formed from wire mesh.

2. A joint according to Claim 1, characterised in that the wire mesh forming the said plug comprises a tubular metal sock folded to form multiple radial layers and made from stainless steel wire braided to form a linked mesh.

3. A joint according to Claim 2, characterised in that the said wire mesh forming the said plug has a degree of compression of between 20% and 40%.

4. A joint according to any preceding claim, characterised in that the said flow-guide element extends substantially to the second end piece.

5. A joint according to any preceding claim, characterised in that the said annular tube-shape plug is formed from a lateral wall of wire mesh having a minimal radial thickness of at least 2mm.

6. A joint according to any preceding claim, characterised in that the said tubular wire mesh plug defining the flow-guide element is fixed within the first end piece with a calibrated end of a greater diameter, which end has preferably been widened before mounting.

7. A joint according to Claim 6, characterised in that the said calibrated end of the tubular wire mesh plug is radially clamped in a pack between a cylindrical inner lateral surface of the first end piece and a containment ring inserted about the said calibrated end of the plug.
